# EUROPÄISCHE PATENTSCHRIFT

(11) **EP 2 571 712 B1**
(45) Veröffentlichungstag und Bekanntmachung des Hinweises auf die Patenterteilung: **16.05.2018**
(21) Anmeldenummer: 11712766.2
(22) Anmeldetag: 31.03.2011
(51) Int. Cl.: B60K 37/06

(54) **VERFAHREN UND VORRICHTUNG ZUM ANZEIGEN VON INFORMATIONEN IN EINEM FAHRZEUG**
METHOD AND DEVICE FOR DISPLAYING INFORMATION IN A VEHICLE
PROCÉDÉ ET DISPOSITIF D'AFFICHAGE D'INFORMATIONS DANS UN VÉHICULE

(30) Priorität: 18.05.2010 DE 102010020894
(43) Veröffentlichungstag der Anmeldung: 27.03.2013
(73) Patentinhaber: Volkswagen Aktiengesellschaft, 38436 Wolfsburg (DE)
(72) Erfinder: DEHMANN, Rainer, 10961 Berlin (DE)
(74) Vertreter: Geske, Kerstin
(86) Internationale Anmeldenummer: PCT/EP2011/001621
(87) Internationale Veröffentlichungsnummer: WO 2011/144274

(56) Entgegenhaltungen:
- EP-A1- 0 672 892
- WO-A2-2009/057070
- US-A1- 2008 140 277

## Beschreibung

Die vorliegende Erfindung betrifft ein Verfahren und eine Vorrichtung zum Anzeigen von Informationen in einem Fahrzeug, insbesondere einem Kraftfahrzeug.
In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt.werden. Als Display werden üblicherweise Flüssigkristallanzeigen in verschiedenen Ausführungen verwendet.

Das Dokument EP 0 672 892 A1 offenbart den Oberbegriff der Ansprüche 1 und 10. Als weitere Anzeigeeinrichtung besitzt ein Fahrzeug häufig eine Multifunktionsanzeige in der Mittelkonsole oder oberhalb der Mittelkonsole, der ein Bedienelement zugeordnet ist. Ein solches Multifunktionsbedienelement ist beispielsweise in der DE 199 41 955 A1 beschrieben.
Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.
Bei der Anzeige von Informationen in einem Kraftfahrzeug ergeben sich sehr spezielle Anforderungen an die Struktur der Anzeige. Die Informationen müssen nämlich so angezeigt werden, dass die Informationsaufnahme auch einfach und intuitiv durch den Fahrer des Kraftfahrzeugs erfolgen kann. Insbesondere sollte die Informationsaufnahme durch den Fahrer nicht zu einer Ablenkung während der Fahrt führen.

Aus der DE 10 2007 039 442 A1 ist ein Verfahren zum Anzeigen von Informationen in einem Kraftfahrzeug bekannt, bei dem graphische Objekte auf einem virtuellen, perspektivisch dargestellten Ring angeordnet dargestellt werden und bei dem auf eine Eingabe eines Nutzers die Graphikdaten so verändert werden, dass sich die Objekte auf dem virtuellen Ring karussellartig drehen.
Diese karussellartige Darstellung von graphischen Objekten ist insbesondere dann von Vorteil, wenn wenige graphische Objekte gleichzeitig dargestellt werden sollen. Wenn jedoch eine größere Anzahl von graphischen Objekten gleichzeitig auf einer relativ kleinen Anzeigefläche dargestellt werden sollen, wie sie beispielsweise in Kraftfahrzeugen üblich ist, ergibt sich das Problem, dass die einzelnen Objekte schwierig vom Fahrer während der Fahrt im Kraftfahrzeug erfasst werden können.
Der vorliegenden Erfindung liegt daher die Aufgabe zugrunde, ein Verfahren und eine Vorrichtung der Eingangs genannten Art anzugeben, bei denen die dargestellten Informationen so schnell und intuitiv wie möglich auch dann erfassbar sind, wenn eine größere Anzahl an graphischen Objekten während der Fahrt des Fahrzeugs angezeigt wird.
Erfindungsgemäß wird diese Aufgabe durch ein Verfahren mit den Merkmalen des Anspruchs 1 und eine Vorrichtung mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren können die beiden Anzeigemodi somit speziell an die Situationen angepasst werden, in denen sie die Informationen anzeigen. Dabei kann ein Anzeigemodus bei einem stehenden Fahrzeug oder einem Fahrzeug, das sich mit geringer Geschwindigkeit bewegt, der Anzeige der graphischen Objekte dienen. Der andere Anzeigemodus kann der Anzeige der graphischen Objekte während der Fahrt des Fahrzeugs dienen.
Die Geschwindigkeitsbereiche sind insbesondre disjunkt, d. h. sie überschneiden sich nicht. Bevorzugt grenzen die Geschwindigkeitsbereiche aneinander an. Beim Über- oder Unterschreiten zumindest eines Grenzwerts der Geschwindigkeit wird somit von dem einen Geschwindigkeitsbereich in den anderen Geschwindigkeitsbereich gewechselt, so dass entsprechend auch die Anzeigemodi gewechselt werden. Bei diesem Übergang von dem einen Anzeigemodus in den anderen Anzeigemodus wird bevorzugt eine Hysterese durchlaufen, um zu verhindern, dass innerhalb kurzer Zeitintervalle mehrfach zwischen den Anzeigemodi hin und her geschaltet wird, wenn sich die Geschwindigkeit des Fahrzeugs im Bereich des Grenzwerts für die. Geschwindigkeit befindet.

Gemäß einer bevorzugten Ausgestaltung des erfindungsgemäßen Verfahrens liegt zumindest ein Grenzwert der Geschwindigkeit in einem Bereich von 4 km/h bis 20 km/h. Falls eine Hysterese durchlaufen wird kann einer der beiden Grenzwerte für die Hysterese in diesem Bereich liegen oder der Mittelwert der beiden Grenzwerte der Hysterese liegt in diesem Bereich. Bevorzugt liegt der Grenzwert der Geschwindigkeit in einem Bereich von 5 km/h bis 10 km/h, insbesondere in einem Bereich von 5 km/h bis 8 km/h. Schließlich ist der Wert von 6 km/h für den Grenzwert für die Geschwindigkeit bevorzugt. Es hat sich herausgestellt, dass beim Einsatz des Verfahrens in einem Kraftfahrzeug diese Werte bzw. Bereiche für den Grenzwert der Geschwindigkeit zum Umschalten zwischen den Anzeigemodi vorteilhaft sind. Es kann auf diese Weise insbesondere erreicht werden, dass der Fahrer durch die Informationsaufnahme so wenig wie möglich vom Führen des Kraftfahrzeugs abgelenkt wird. Somit leistet das erfindungsgemäße Verfahren einen Beitrag zur Sicherheit beim Führen des Fahrzeugs.

Gemäß einer Ausgestaltung des erfindungsgemäßen Verfahrens unterscheiden sich die beiden Anzeigemodi nur hinsichtlich des Layouts der Darstellung der graphischen Objekte, nicht jedoch hinsichtlich des Inhalts bezüglich der graphischen Objekte. Zwar können die graphischen Objekte auf andere Weise in den beiden Anzeigemodi dargestellt werden. Es wird jedoch insbesondere die gleiche Anzahl an graphischen Objekten in jeweils verschiedener Anordnung dergestellt.

Die graphischen Objekte sind insbesondere Teil einer Liste mit Listenelementen, wobei die graphischen Objekte den einzelnen Listenelementen der Liste zugeordnet sind. Sie werden somit als Repräsentanten der Listenelemente von der Anzeigeeinrichtung dargestellt. Bei dem erfindungsgemäßen Verfahren sollen insbesondere alle graphischen Objekte der Liste gleichzeitig von der Anzeigeeinrichtung angezeigt werden. Durch die geschwindigkeitsabhängige Wahl des Anzeigemodus kann somit bei dem erfindungsgemäßen Verfahren eine maßgeschneiderte Anpassung des Layouts an die Geschwindigkeit des Fahrzeugs erreicht werden, so dass die Informationen immer optimal vom Fahrer aufgenommen werden können.

Die Anzahl der in den Anzeigemodi angezeigten graphischen Objekte ist insbesondere größer als acht. Es hat sich herausgestellt, dass bei der Darstellung von neun graphischen Objekten und mehr die Aufnahme und die Unterscheidung der einzelnen graphischen Objekte bei bestimmten Darstellungsarten dann schwierig wird, wenn die Informationen während der Fahrt bei Geschwindigkeiten oberhalb der vorgenannten Grenzwerte vom Fahrer aufgenommen werden sollen.

Gemäß einer bevorzugten Weiterbildung des erfindungsgemäßen Verfahrens steuert beim Übergang von dem einen in den anderen Anzeigemodus die Steuervorrichtung die Anzeigeeinrichtung so an, dass sich die in dem einen Anzeigemodus dargestellten Objekte aufeinander zu bewegen, bis sie sich in einem zentralen Bereich vereinen, und daraufhin voneinander weg in Richtung der Positionen der Darstellung in dem anderen Anzeigemodus bewegen. Dabei kann insbesondere nach der Vereinigung der graphischen Objekte kurzzeitig eine inhaltsleere Anzeige wiedergegeben werden, woraufhin dann die graphischen Objekte wieder dargestellt werden. Es wird somit zunächst eine Kontraktion des Informationsinhalts und anschließen eine Expansion des Informationsinhalts gezeigt. Auf diese Weise kann eine einheitliche Bewegung der einzelnen graphischen Objekte erreicht werden, die insbesondere unabhängig davon ist, ob ein bestimmtes graphisches Objekt ausgewählt ist, und unabhängig von der Darstellungsart in den Anzeigemodi ist.

Gemäß einer weiteren Ausgestaltung des erfindungsgemäßen Verfahrens ist die Bewegung der graphischen Objekte von den Positionen bei der Darstellung in dem einen Anzeigemodus aufeinander zu in Richtung des zentralen Bereichs beschleunigt. Ferner ist die Bewegung der graphischen Objekte danach voneinander weg in Richtung der Positionen bei der Darstellung in dem anderen Anzeigemodus abgebremst. Auf diese Weise wird erreicht, dass der Betrachter den Übergang zwischen den Anzeigemodi sehr einfach und intuitiv erfassen kann, was insbesondere bei einem Einsatz des Verfahrens in einem Kraftfahrzeug von Vorteil ist. Ferner kann die Größe der Beschleunigung bzw. Abbremsung Bewegung der graphischen Objekte von der Größe der Fahrzeuggeschwindigkeit abhängen.

Bei dem ersten Anzeigemodus werden die graphischen Objekte beispielsweise auf einem virtuellen, perspektivisch dargestellten Ring angeordnet dargestellt. Dabei kann bei einer Auswahl eines graphischen Objekts die Anzeige so verändert werden, dass sich die graphischen Objekte auf dem virtuellen Ring karussellartig drehen, bis das ausgewählte Objekt im Vordergrund des perspektivisch dargestellten Rings dargestellt ist, wie es beispielsweise im Detail in der DE 10 2007 039 442 A1 beschrieben ist.

Des Weiteren können bei dem zweiten Anzeigemodus die graphischen Objekte beispielsweise nebeneinander, überlappungsfrei in einem Raster dargestellt werden, wobei jedes graphische Objekt unabhängig von einer Auswahl eines graphischen Objekts eine feste Position in dem Raster hat.

Beim Übergang zwischen diesen beiden Anzeigemodi steuert die Steuervorrichtung die Anzeigeeinrichtung insbesondere so an, dass sich die auf dem Ring dargestellten Objekte aufeinander zu bewegen, bis sie sich in einem zentralen Bereich vereinen. Daraufhin bewegen sich die graphischen Objekte voneinander weg in Richtung der Positionen bei der Darstellung in dem Raster. Umgekehrt bewegen sich beim Übergang von der Darstellung in dem Raster die graphischen Objekte aufeinander zu, bis sie sich in einem zentralen Bereich vereinen. Daraufhin bewegen sich die graphischen Objekte voneinander weg in Richtung ihrer Positionen bei der Darstellung auf dem Ring.

Gemäß einer Weiterbildung des erfindungsgemäßen Verfahrens werden in zumindest einem Anzeigemodus alphanumerische Elemente angezeigt, die zumindest einem Teil der graphischen Objekte zugeordnet sind. Während des Übergangs in den anderen Anzeigemodus werden diese alphanumerischen Elemente ausgeblendet und gegebenenfalls nach Abschluss des Übergangs wieder eingeblendet.

Die erfindungsgemäße Vorrichtung zum Anzeigen von Informationen in einem Fahrzeug umfasst eine Anzeigeeinrichtung und eine Steuervorrichtung zum Steuern der Anzeigeeinrichtung, wobei mittels der Steuervorrichtung mehrere graphische Objekte von der Anzeigeeinrichtung in einem ersten oder einem zweiten Anzeigemodus anzeigbar sind. Ferner ist eine Messvorrichtung zum Messen der Geschwindigkeit des Fahrzeugs vorgesehen, die mit der Steuervorrichtung gekoppelt ist. Die erfindungsgemäße Vorrichtung ist dadurch gekennzeichnet, dass mittels der Steuervorrichtung die Anzeigeeinrichtung so ansteuerbar ist, dass in einem ersten Geschwindigkeitsbereich die Objekte in dem ersten Anzeigemodus angezeigt werden und in einem zweiten Geschwindigkeitsbereich die Objekte in dem zweiten Anzeigemodus angezeigt werden.

Die erfindungsgemäße Vorrichtung ist insbesondere so ausgebildet, dass sie das vorstehend beschriebene Verfahren insgesamt oder teilweise auszuführen kann. Die erfindungsgemäße Vorrichtung weist somit auch dieselben Vorteile wie das vorgenannte erfindungsgemäße Verfahren auf.

Bei der Anzeigeeinrichtung kann es sich um ein Display beliebiger Bauart handeln, welches eine Anzeigefläche im Innenraum des Fahrzeugs bereitstellt. Des Weiteren kann es sich bei der Anzeigeeinrichtung um ein Display zur autostereoskopischen Wiedergabe von Informationen handeln, bei welchem die Information dreidimensional dargestellt wird. Schließlich kann es sich bei der Anzeigeeinrichtung um ein so genanntes Head-up-Display oder ein Head-down-Display handeln, bei welcher die Anzeige auf eine Oberfläche, beispielsweise auf die Windschutzscheibe des Fahrzeugs, projiziert wird.

Im Folgenden wird ein Ausführungsbeispiel der Erfindung mit Bezug zu den Zeichnungen erläutert.
- Figur 1: zeigt schematisch den Aufbau eines Ausführungsbeispiels der erfindungsgemäßen Vorrichtung zum Anzeigen von Informationen,
- die Figuren 2-9: zeigen Darstellungen auf einer Anzeigefläche, die von einem Ausführungsbeispiel des erfindungsgemäßen Verfahrens gemäß einem ersten Aspekt erzeugt werden,
- die Figuren 10-23: zeigen Darstellungen auf einer Anzeigefläche, die von einem Ausführungsbeispiel des erfindungsgemäßen Verfahrens gemäß einem zweiten und einem dritten Aspekt erzeugt werden.

Die Vorrichtung zum Anzeigen von Informationen umfasst eine Anzeigeeinrichtung 1 mit einer Anzeigefläche 2. Die Anzeigefläche 2 kann von einem Display, insbesondere einem Flüssigkristalldisplay, beliebiger Bauart bereitgestellt werden. Ferner kann es sich bei der Anzeigeeinrichtung 1 um eine Projektionseinrichtung handeln, wie z. B. ein Head-up- oder Head-down-Display in einem Fahrzeug.

Die Anzeigeeinrichtung 1 ist mit einer Steuervorrichtung 3 datentechnisch gekoppelt. Die Steuervorrichtung 3 erzeugt Graphikdaten zur Informationsdarstellung auf der Anzeigefläche 2. Von , der Steuervorrichtung 3 können nicht nur statische Anzeigebilder erzeugt werden, sondern insbesondere auch Animationen, die Übergänge zwischen verschiedenen Anzeigemodi durch eine Bewegung von graphischen Objekten visualisieren. Ferner können die Animationen Bewegungen einzelner graphischer Objekte in einem bestimmten Anzeigemodus betreffen oder die Bewegung eines graphischen Objekts von einer ersten Darstellung eines Anzeigemodus in eine zweite Darstellung. Bei den Animationen kann es sich inbesondere um so genannte Schlüsselbildanimationen handeln, bei denen die Einzelbilder zwischen zwei Schlüsselbildern einer Animation erzeugt werden, um den Eindruck einer flüssigen Veränderung zu erwecken. Die zwischen den Schlüsselbildern entstandenen Bilder werden auch als Inbetweens und das Erzeugen der Schlüsselbildanimation als Tweening bezeichnet. Zum Erzeugen der Graphikdaten und zum Ausführen der Animationen ist die Steuervorrichtung 3 mit einem Speicher 5 und einer Systemuhr 4 datentechnisch gekoppelt.

Des Weiteren ist eine Eingabeeinrichtung vorgesehen. Die Eingabeeinrichtung kann insbesondere eine berührungsempfindliche Oberfläche umfassen, die separat von der Anzeigefläche 2 vorgesehen ist, so dass ein so genanntes Touchpad gebildet ist, oder die auf der Anzeigefläche 2 vorgesehen ist, so dass ein so genannter Touchscreen bereitgestellt wird. Des Weiteren kann die Eingabeeinrichtung, die das Touchpad oder den Touchscreen umfasst, eine Annäherungserfassungsvorrichtung umfassen, welche die Annäherung eines Betätigungselements, wie z. B. insbesondere die Fingerspitze eines Nutzers, an die berührungsempfindliche Oberfläche erfasst. In Abhängigkeit von der Annäherung eines solchen Betätigungselements an die berührungsempfindliche Oberfläche kann die angezeigte Information verändert werden.

Des Weiteren kann die Eingabeeinrichtung eine an sich bekannte Einrichtung zum Erfassen und Auswerten einer Geste eines Körperteils eines Nutzers sein. Beispielsweise kann die Hand eines Nutzers vor der Anzeigefläche 2 eine Geste ausführen. Die dreidimensionale Position der Hand in einem bestimmten Aufenthaltsbereich vor der Anzeigefläche 2 wird erfasst und als Eingabe interpretiert. In diesem Fall ist es nicht erforderlich, dass der Nutzer die Anzeigefläche 2 berührt.

Schließlich kann als Eingabeeinrichtung ein abgesetztes Bedienelement eingesetzt werden, insbesondere ein mechanisches Bedienelement. Bei dem mechanischen Bedienelement kann es sich um ein Drehsteller oder einen an sich bekannten Drehdrücksteller handeln. Mittels dieses Bedienelements sind graphische Objekte, die auf der Anzeigefläche 2 angezeigt werden, ansteuerbar, veränderbar und auswählbar.

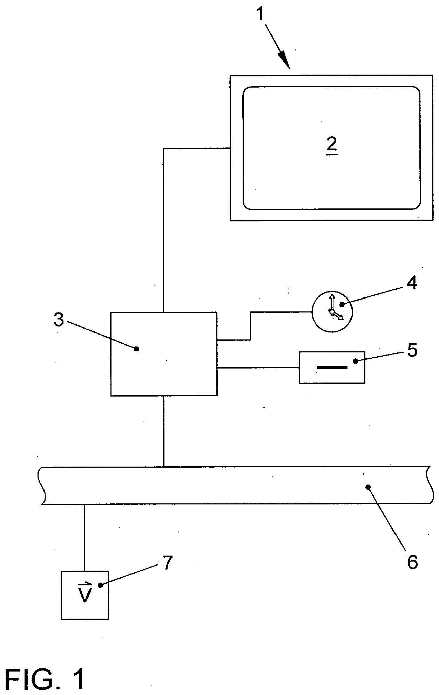

Die Steuervorrichtung 3 ist ferner mit weiteren Einrichtungen verbunden, welche der Steuervorrichtung 3 Daten für die Anzeige auf der Anzeigefläche 2 übermitteln. In dem in Fig. 1 gezeigten Ausführungsbeispiel wird die Vorrichtung in einem Fahrzeug, insbesondere einem Kraftfahrzeug, eingesetzt. Die Steuervorrichtung 3 ist in diesem Fall mit einem Datenbus 6 des Fahrzeugs verbunden. Der Datenbus 6 ist wiederum mit vielfältigen Einrichtungen im Fahrzeug gekoppelt, insbesondere mit einer Messvorrichtung 7 zum Messen der Geschwindigkeit des Fahrzeugs. Die aktuelle Fahrzeuggeschwindigkeit kann somit von der Messvorrichtung 7 über den Datenbus 6 an die Steuervorrichtung 3 übertragen werden.

Im Folgenden wird ein erster Aspekt des erfindungsgemäßen Verfahrens erläutert, welches von der mit Bezug zu Fig. 1 beschriebenen Vorrichtung ausgeführt werden kann. In diesem Fall wird die Vorrichtung bzw. das Verfahren in einem Fahrzeug eingesetzt.

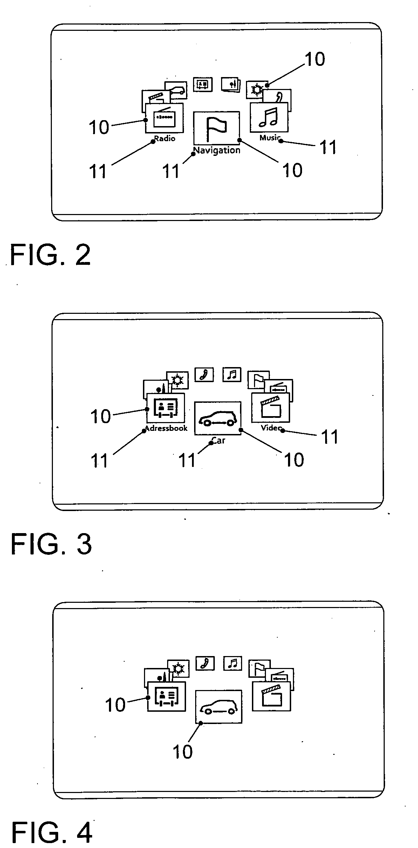

Die Informationen werden bei dem Verfahren in einer hierarchischen Struktur angezeigt. Ausgangspunkt für diese hierarchische Struktur ist die in Fig. 2 gezeigte Wiedergabe auf der Anzeigefläche 2. Es werden mehrere graphische Objekte 10 auf einem virtuellen, perspektivisch dargestellten Ring angeordnet dargestellt. Die perspektivische Darstellung zeigt den virtuellen Ring so, als ob der Betrachter von schräg oben auf den Ring schaut. Dabei wird ein graphisches Objekt 10 im Vordergrund in der perspektivischen Darstellung am größten dargestellt. Nach hinten werden weitere graphische Objekte 10, zum Teil von vor ihn befindlichen Objekten 10 verdeckt, dargestellt. Insgesamt werden bei dem Ausführungsbeispiel neun oder mehr graphische Objekte 10 angezeigt.

Die graphischen Objekte 10 sind als Schaltflächen ausgebildet, so dass sie vom Nutzer mittels der Eingabeeinrichtung markiert bzw. ausgewählt werden können. Unter einer *Schaltfläche* wird im Sinne der Erfindung ein Steuerelement einer graphischen Benutzerschnittstelle verständen. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche 2 erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Anzeigefläche erfolgen.

Die graphischen Objekte 10 umfassen Symbole, die dem Nutzer Hinweise auf die Funktion des Objekts geben. Ferner können zumindest einige graphische Objekte 10 Beschriftungen 11 aufweisen, welche die Funktion nochmals alphanumerisch erläutert. Bei der Darstellung der Objekte 10 auf dem perspektivisch gezeigten Ring werden insbesondere Beschriftungen 11 für die im Vordergrund dargestellten Objekte 10 wiedergegeben.

Der Nutzer kann mittels der Eingabeeinrichtung die Objekte 10 auf dem perspektivisch dargestellten Ring karussellartig drehen. Beispielsweise kann der Nutzer mittels der Eingabeeinrichtung beliebige graphische Objekte 10 in den Vordergrund bringen und auswählen. In Fig. 2 ist beispielsweise ein graphisches Objekt 10 im Vordergrund dargestellt, welches dem Navigationssystem eines Fahrzeugs zugeordnet ist, in Fig. 3 ist ein graphisches Objekt 10 im Vordergrund dargestellt, welches verschiedenen Anzeigen von Betriebsparametern des Fahrzeugs zugeordnet ist. Details zur Anzeige und Steuerung der graphischen Objekte 10 in dem Anzeigemodus, der in den Fig. 2 und 3 gezeigt ist, sind in der DE 10 2007 039 442 A1 beschrieben.

Bei dem erfindungsgemäßen Verfahren können die graphischen Objekte 11 jedoch nicht nur in dem in den Fig. 2 und 3 gezeigten ersten Anzeigemodus dargestellt werden. Es ist ein zweiter Anzeigemodus definiert, in dem dieselben graphischen Objekte 10 in einer anderen Art und Weise, d. h. in einem anderen Layout, angezeigt werden. Es hat sich nämlich herausgestellt, dass die Anzeige auf dem perspektivisch dargestellten Ring des ersten Anzeigemodus während der Fahrt im Fahrzeug vom Fahrer dann schwer erfasst und bedient werden kann, wenn mehr als acht graphische Objekte 10 dargestellt werden. Aus diesem Grund wird bei dem erfindungsgemäßen Verfahren der Anzeigemodus in Abhängigkeit von der Fahrzeuggeschwindigkeit automatisch ausgewählt. Bewegt sich das Fahrzeug in einem ersten Geschwindigkeitsbereich, werden die graphischen Objekte 10 in dem ersten Anzeigemodus angezeigt. Bewegt sich das Fahrzeug in einem anderen, zweiten Geschwindigkeitsbereich, werden die graphischen Objekte 10 in dem später beschriebenen zweiten Anzeigemodus dargestellt. Die beiden Geschwindigkeitsbereiche grenzen einander an, wobei eine Grenzgeschwindigkeit definiert ist. Wird diese Grenzgeschwindigkeit über- oder unterschritten, erfolgt automatisch ein Wechsel von dem einen Anzeigemodus in den anderen Anzeigemodus. Die Grenzgeschwindigkeit liegt beispielsweise in einem Bereich von 4 km/h bis 20 km/h, insbesondere in einem Bereich von 5 km/h bis 10 km/h und bevorzugt in einem Bereich von 5 km/h bis 8 km/h. In dem hier beschriebenen Ausführungsbeispiel wurde ein Grenzwert für die Geschwindigkeit von 6 km/h gewählt.

Für den Übergang von dem einen Anzeigemodus in den anderen Anzeigemodus kann ferner eine Hysterese durchlaufen werden, die beispielsweise in einem Bereich von 2 km/h bis 5 km/h liegen kann. Ist beispielsweise bei einer Grenzgeschwindigkeit von 6 km/h eine Hysterese von 2 km/h definiert, wechselt der Anzeigemodus, wenn die Fahrzeuggeschwindigkeit 8 km/h überschreitet. Verringert sich daraufhin die Geschwindigkeit wieder, wechselt der Anzeigemodus jedoch erst wieder, wenn die Geschwindigkeit 4 km/h unterschritten hat. Steigt daraufhin die Fahrzeuggeschwindigkeit wieder, wird erneut erst bei einer Geschwindigkeit von 8 km/h der Anzeigemodus gewechselt. Für die Hysterese werden somit zwei Grenzgeschwindigkeiten oberhalb und unterhalb der mittleren Grenzgeschwindigkeit definiert.

Die Fahrzeuggeschwindigkeit wird fortwährend von der Messvorrichtung 7 an die Steuervorrichtung 3 übertragen. Wird der Grenzwert für die Fahrzeuggeschwindigkeit überschritten bzw. unterschritten, erzeugt die Steuervorrichtung 3 eine Animation für den Übergang von dem einen Anzeigemodus in den anderen Anzeigemodus. Die Anzeige auf der Anzeigefläche 2 verändert sich somit nicht abrupt, sondern in einem fließenden Übergang, so dass der Nutzer die Orientierung in der hierarchischen Anzeigestruktur behält.

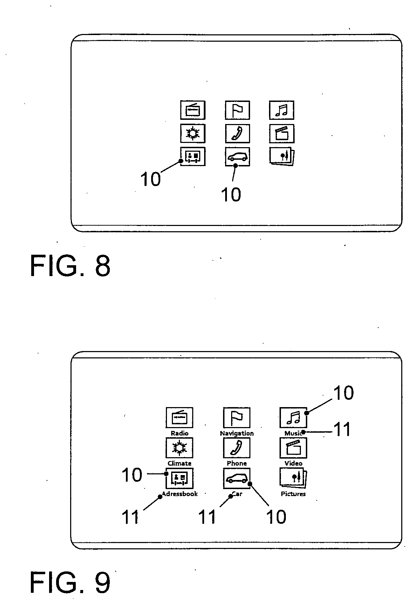

Im Folgenden wird mit Bezug zu den Fig. 3 bis 9 der Übergang von dem in Fig. 3 gezeigten ersten Anzeigemodus in den in Fig. 9 gezeigten zweiten Anzeigemodus erläutert:
Im Fahrzeug wird im Stehen die in Fig. 3 gezeigte Anzeige auf der Anzeigefläche 2 wiedergegeben. Der Fahrer setzt das Fahrzeug nun in Bewegung und überschreitet die Grenzgeschwindigkeit für den Übergang vom ersten Anzeigemodus in den zweiten Anzeigemodus. Dieses Überschreiten der Grenzgeschwindigkeit wird von der Steuervorrichtung 3 auf Basis der Daten von der Messvorrichtung 7 erfasst. Daraufhin erzeugt die Steuervorrichtung 3 eine Animation, d. h. eine Bewegung der graphischen Objekte 10, wie sie in den Fig. 4 bis 9 gezeigt ist.

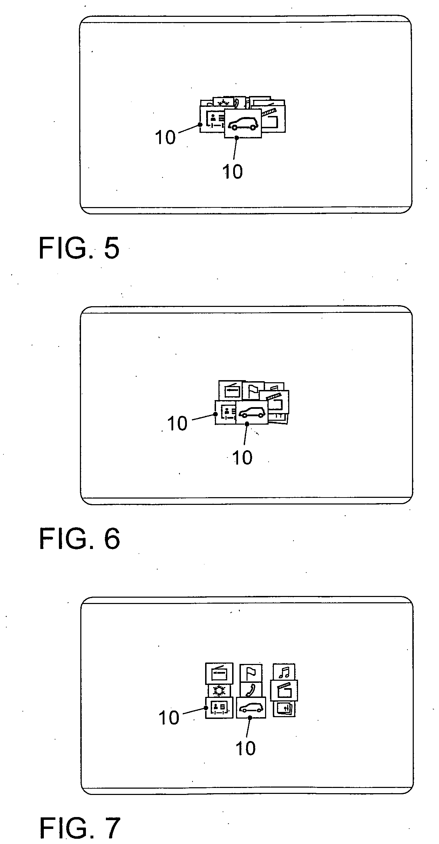

Zunächst verschwinden die Beschriftungen 11 der drei im Vordergrund dargestellten graphischen Elemente 10 (Fig. 4). Daraufhin bewegen sich die graphischen Objekte 10 aufeinander zu, wie dies in den Fig. 4 und 5 dargestellt ist, bis sie sich in einem zentralen Bereich der Anzeigefläche 2 vereinen. Am Ende dieser Vereinigung kann gegebenenfalls kurzzeitig eine inhaltsleere Anzeige auf der Anzeigefläche 2 wiedergegeben werden. Daraufhin werden die graphischen Objekte 10 wieder dargestellt. Sie bewegen sich nun voneinander weg in Richtung der Positionen der Darstellung in dem zweiten Anzeigemodus. Die Expansion der graphischen Objekte 10 ist in den Fig. 6 bis 9 gezeigt. Fig. 9 zeigt dabei den Endzustand der Anzeige in dem zweiten Anzeigemodus.

Die graphischen Objekte 10 werden im zweiten Anzeigemodus nebeneinander, überlappungsfrei in einem Raster dargestellt. Dabei ist jedem graphischen Objekt unabhängig von der Auswahl eines der graphischen Objekte eine feste Position in dem Raster zugeordnet. Ist die Bewegung der graphischen Objekte 10 in die Rasterdarstellung beendet, werden abschließend für alle graphischen Objekte 10 Beschriftungen 11 angezeigt.

In dem zweiten Anzeigemodus kann der Fahrer des Fahrzeugs alle graphischen Objekte 10 sehr schnell erfassen. Um ein bestimmtes Objekt 10 auszuwählen, wird somit sehr wenig Aufmerksamkeit vom Fahrer beansprucht, so dass er durch das Auswählen eines graphischen Objekts 10 nicht vom Fahrgeschehen abgelenkt wird. Die schnelle und intuitive Aufnahme der Information, wie sie im zweiten Anzeigemodus dargestellt wird, wird dadurch unterstützt, dass alle graphischen Objekte 10 überlappungsfrei in derselben Größe dargestellt werden. Ferner kann sich der Benutzer sehr einfach in der Rasterdarstellung orientieren, da die verschiedenen graphischen Objekte 10 einen festen Platz in dem Raster haben, den sich der Nutzer nach mehrmaliger Nutzung merken kann.

Unterschreitet das Fahrzeug danach wieder die Grenzgeschwindigkeit, gegebenenfalls unter Berücksichtigung der Hysterese, erzeugt die Steuervorrichtung 3 eine umgekehrte Animation von dem zweiten Anzeigemodus in den ersten Anzeigemodus. Dabei werden die graphischen Objekte 10 von der in Fig. 9 gezeigten Rasterdarstellung aufeinander zu bewegt, bis sie sich in dem zentralen Bereich vereinen und daraufhin wieder expandiert in Richtung der Positionen auf dem Ring, wie er in Fig. 2 oder 3 dargestellt ist. Auch bei dieser umgekehrten Animation werden die Beschriftungen 10 ausgeblendet und im Endzustand wieder eingeblendet. War in der Rasterdarstellung ein Objekt 10 markiert, wird dieses Objekt 10 in der Darstellung auf dem Ring des ersten Anzeigemodus im Vordergrund dargestellt.

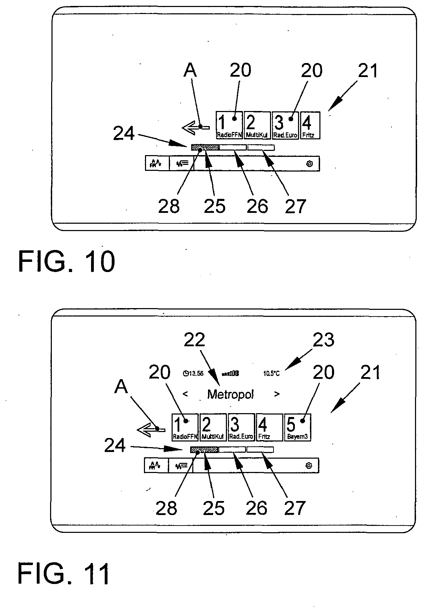

Mit Bezug zu den Fig. 9 bis 12 wird ein weiterer Aspekt des erfindungsgemäßen Verfahrens erläutert, der auch von der mit Bezug zu Fig. 1 beschriebenen Vorrichtung ausgeführt werden kann. In diesem Fall ist der Einsatz der erfindungsgemäßen Vorrichtung bzw. des erfindungsgemäßen Verfahrens nicht auf ein Fahrzeug beschränkt. Die Vorrichtung und das Verfahren können in beliebigen Geräten, insbesondere in tragbaren Geräten, wie einem Musikspieler, einem Mobiltelefon oder einem mobilen Navigationssystem eingesetzt werden. Selbstverständlich ist auch der Einsatz in einem Fahrzeug möglich.

Der zweite Aspekt des erfindungsgemäßen Verfahrens betrifft den Übergang von einer ersten Darstellung auf der Anzeigefläche 2 in eine zweite Darstellung auf der Anzeigefläche 2. Die erste Darstellung kann die Anzeige in dem ersten oder dem zweiten Anzeigemodus sein, wie sie in den Fig. 2, 3 und 9 gezeigt ist. Die zweite Darstellung betrifft beispielsweise den Kontext eines graphischen Objektes 10. Die zweite Darstellung wird insbesondere nach einer Auswahl eines graphischen Objekts 10 durch einen Nutzer mittels der Eingabeeinrichtung angezeigt. In diesem Fall wird somit ein anderer Informationsinhalt angezeigt und nicht nur ein verändertes Layout. Auch in diesem Fall wird jedoch kein abrupter Wechsel der Anzeige auf der Anzeigefläche 2 herbeigeführt, sondern ein fließender Übergang von der ersten Darstellung in die zweite Darstellung, wie es im Folgenden erläutert wird:
Wählt der Nutzer beispielsweise ausgehend von der Anzeige, wie sie in Fig. 9 gezeigt ist, das graphische Objekt 10 mit der Bezeichnung "Radio" aus, erzeugt die Steuervorrichtung 3 eine Animation, bei welcher die graphischen Objekte 10 nach außen voneinander weg bewegt werden. Kurzzeitig wird eine inhaltsleere Anzeige auf der Anzeigefläche 2 wiedergegeben. Daraufhin werden verschiedene andere graphische Objekte 20 der zweiten Darstellung auf der Anzeigefläche 2 zu ihrer Endposition hin bewegt. Wichtig bei dem zweiten Aspekt des erfindungsgemäßen Verfahrens ist die Bewegung der neu angezeigten graphischen Objekte 20, insbesondere die Bewegung eines Hauptobjekts, welches als Blickfang für den Nutzer bei diesem Übergang-dient.

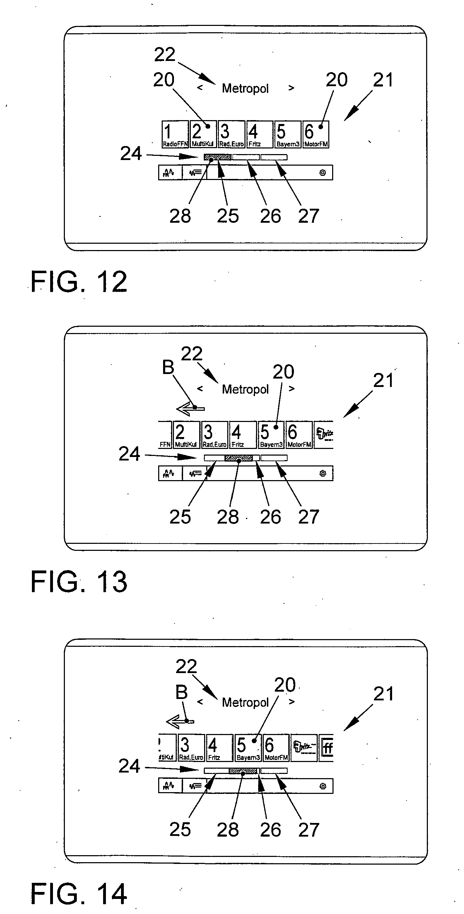

In dem in diesem Ausführungsbeispiel beschriebenen Übergang wird für die Radiofunktion eine Leiste 21 in die Anzeigefläche 2 hineinbewegt. Diese Leiste 21 enthält mehrere graphische Objekte 20, welche einzelne Radiosender repräsentieren. Die Leiste 21 wird in einem bestimmten Bewegungsmuster bei diesem Übergang auf der Anzeigefläche 2 bewegt. In dem hier beschriebenen Ausführungsbeispiel wird die Leiste 21 mit den graphischen Objekten 20 von rechts in Richtung des Pfeils A nach links bewegt. Dabei erscheinen immer mehr graphische Objekte 20, bis im Endzustand, wie in Fig. 12 gezeigt ist, insgesamt sechs graphische Objekte 20 auf der Leiste 21 dargestellt werden. Mit der Bewegung der Leiste 21 werden außerdem weitere Anzeigeelemente oder Schaltflächen 22, 23 und 24 eingeblendet.

Das Bewegungsmuster, welches die Leiste 21 ausführt, zeichnet sich dadurch aus, dass es einem Bewegungsmuster entspricht, welches in der zweiten Darstellung ausgeführt wird, wenn eines der graphischen Objekte 20 auf eine Eingabe mittels der Eingabeeinrichtung in der zweiten Darstellung bedient wird.

Der Nutzer kann z. B., um weitere graphische Objekte 20 für andere Radiosender zur Anzeige zu bringen, die graphischen Objekte 20 auf der Leiste 21 bewegen. Die Bewegung der graphischen Objekte 20 erfolgt dabei auch in Richtung des Pfeils A bzw. in entgegengesetzter Richtung. Beim Übergang von der ersten Darstellung in die zweite Darstellung wird dem Betrachter somit durch die Bewegung der Leiste 21 mit den graphischen Objekten 20 bereits vermittelt, wie die graphischen Objekte 20 in der zweiten Darstellung bewegt werden können. Die Art des Übergangs dient somit gleichzeitig als Bedienungsanleitung für die Betätigung von den graphischen Objekten 20 einer Liste in der zweiten Darstellungsart.

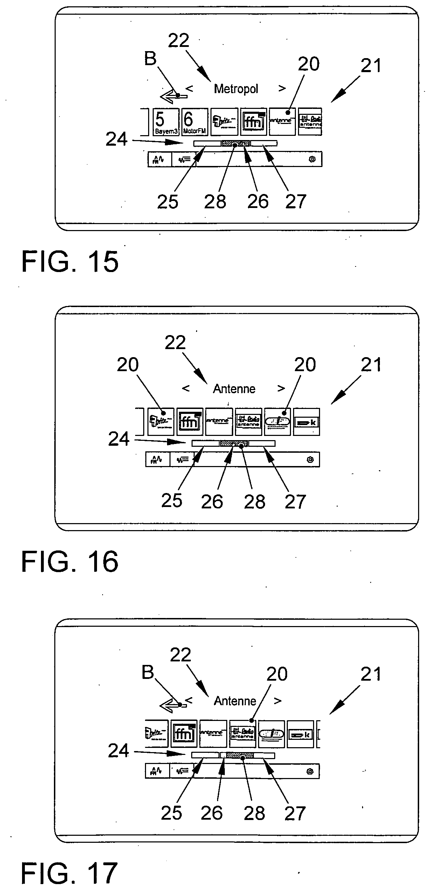

Wie in den Fig. 13 bis 19 gezeigt, kann der Nutzer nämlich die graphischen Objekte 20 beispielsweise mit einer Wischgeste in Richtung des Pfeils B bewegen, um die graphischen Objekte 20 nach links zu verschieben und andere graphische Elemente 20 für andere Radiosender zur Anzeige zu bringen. Im vorliegenden Fall enthält die Liste mit den Radiosendern insgesamt achtzehn Listeneinträge, denen jeweils ein graphisches Objekt 20 zugeordnet ist. Durch eine Wischgeste in Richtung des Pfeils B oder in entgegengesetzter Richtung kann der Nutzer die Anzeige der Listeneinträge entsprechend verändern. Das Bewegungsmuster dieser Bewegung in Richtung des Pfeils B bzw. in entgegengesetzter Richtung entspricht dabei dem Bewegungsmuster in Richtung des Pfeils A beim Übergang in die Darstellung der graphischen Objekte 20 für die Radiosender. Falls die Listeneinträge in einem anderen Bewegungsmuster verändert werden, beispielsweise in einer Schwenk- oder Drehbewegung, würde auch der Übergang in die zweite Darstellungsart mit den Radiosendern so erfolgen, dass die Liste mit den graphischen Objekten 20 in einer Schwenk- oder Drehbewegung auf der Anzeigefläche 2 hineinbewegt werden.

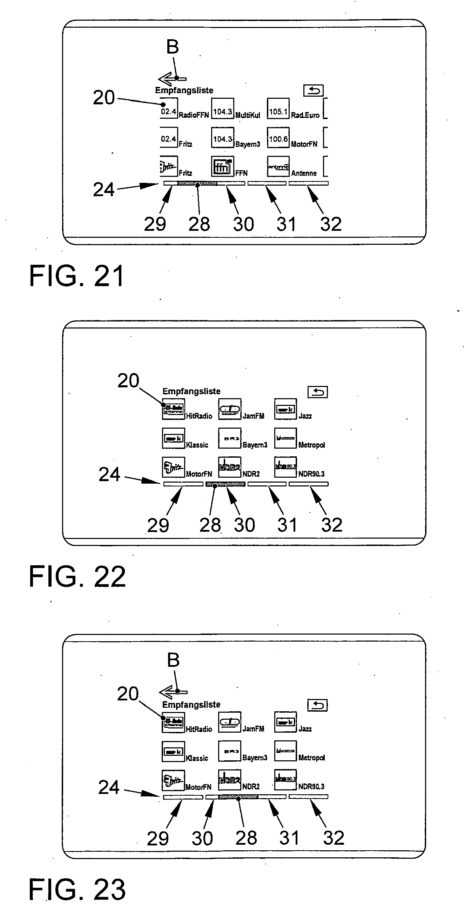

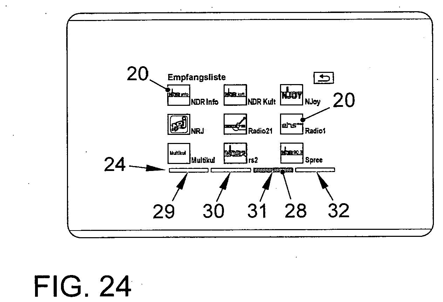

Mit Bezug zu den Fig. 12 bis 24 wird schließlich ein dritter Aspekt des erfindungsgemäßen Verfahrens erläutert, der auch von der mit Bezug zu Fig. 1 beschriebenen Vorrichtung ausgeführt werden kann. Auch dieser dritte Aspekt ist unabhängig von dem Einsatz im Fahrzeug. Er kann insbesondere auch in tragbaren Geräten eingesetzt werden.

Wie vorstehend erläutert können insgesamt achtzehn graphische Objekte 20, welche verschiedene Radiosender repräsentieren, auf der Anzeigefläche 2 dargestellt werden. Die Anzeigefläche 2 ist jedoch nicht groß genug, um alle achtzehn Objekte 20 gleichzeitig darzustellen. Es wird daher auf der Anzeigefläche 2 immer nur eine echte Teilmenge der Gesamtmenge der graphischen Objekte 20 angezeigt. Die angezeigte Teilmenge lässt sich durch einen Bedienvorgang, welcher mittels der Eingabeeinrichtung ausgeführt wird, verändern. Der-dritte Aspekt des erfindungsgemäßen Verfahrens betrifft ein Verfahren zum Bereitstellen einer Benutzerschnittstelle, bei welcher die angezeigte Teilmenge der Objekte 20 verändert werden kann und dem Nutzer visualisiert wird, welche Teilmenge innerhalb der Gesamtmenge momentan angezeigt wird.

Wenn auf einer Anzeigefläche 2 nur eine Teilmenge einer Menge mit einer Vielzahl von Objekten angezeigt wird, wird dem Betrachter herkömmlicherweise als graphisches Element eine so genannte Bildlaufleiste (Scrollbar) angezeigt. Eine solche Bildlaufleiste umfasst zwei graphische Teilelemente: zum einen wird eine Leiste angezeigt, deren Länge die Größe der Gesamtmenge repräsentiert, zum anderen wird eine Markierung auf der Leiste angezeigt, deren Länge die Größe der angezeigten Teilmenge repräsentiert und deren Position relativ zu der Leiste dem Betrachter visualisiert, wo sich die angezeigte Teilmenge innerhalb der Gesamtmenge befindet. Die angezeigte Menge ist in diesem Fall somit insbesondere einer bestimmten Ordnung unterworfen.

Bei dem erfindungsgemäßen Verfahren gemäß dem dritten Aspekt ist die Benutzerschnittstelle und die Art der Visualisierung wie folgt modifiziert:
Die graphischen Objekte 20 werden in n disjunkte Teilmengen unterteilt. Dabei ist n eine natürliche Zahl die größer als 2 ist. Im hier beschriebenen Ausführungsbeispiel umfasst die Gesamtmenge der graphischen Objekte 20 insgesamt achtzehn Objekte 20. Diese Gesamtmenge ist in drei disjunkte Teilmengen unterteilt: Die erste Teilmenge umfasst die graphischen Objekte 20 Nr. 1 bis 6, die zweite Teilmenge umfasst die graphischen Objekte 20 Nr. 7 bis 12 und die dritte Teilmenge umfasst die graphischen Objekte 20 Nr. 13 bis 18.

Wie in Fig. 12 gezeigt, befindet sich unterhalb der Anzeige der graphischen Objekte 20 für die Radiosender ein graphisches Element, welches in zwei Teilelemente unterteilt ist. Das erste graphische Teilelement ist eine modifizierte Leiste 24. Die Leiste 24 ist wiederum in insgesamt n Segmente unterteilt, die beabstandet voneinander angeordnet sind. Im vorliegenden Fall werden somit die drei Segmente 25, 26 und 27 angezeigt.

Des Weiteren wird als zweites graphisches Teilelement eine Markierung 28 angezeigt. Wenn kein Bedienvorgang zum Verändern der anzuzeigenden Teilmenge der graphischen Objekte 20 ausgeführt wird, wird die Markierung 28 immer deckungsgleich mit einem der Segmente 25, 26 oder 27 angezeigt. Wird die Markierung 28 auf dem Segment 25 angezeigt, wird dem Betrachter visualisiert, dass die graphischen Objekte 20 für die ersten sechs Radiosender angezeigt werden, wird die Markierung 28 auf dem Segment 26 angezeigt, wird dem Betrachter visualisiert, dass die graphischen Objekte 20 der zweiten sechs Radiosender angezeigt werden und wird die Markierung 28 auf dem Segment 27 angezeigt, wird dem Betrachter visualisiert, dass die graphischen Objekte 20 für die dritten sechs Radiosender angezeigt werden.

Durch einen Bedienvorgang kann der Nutzer die angezeigte Teilmenge verändern. Umfasst die Eingabeeinrichtung beispielsweise eine berührungsempfindliche Oberfläche auf der Anzeigefläche 2, kann die Teilmenge durch eine Wischgeste verändert werden. Ausgehend von der in Fig. 12 gezeigten Anzeige kann der Nutzer beispielsweise mit seiner Fingerspitze die Leiste 21 mit den graphischen Objekten 20 berühren und wie in den Fig. 13 bis 19 gezeigt, die Fingerspitze in Richtung des Pfeils B bewegen. Diese Bewegung der Fingerspitze auf der berührungsempfindlichen Oberfläche auf der Anzeigefläche 2 wird von der Steuervorrichtung 3 erfasst und die Steuervorrichtung 3 verändert daraufhin entsprechend die auf der Anzeigefläche 2 wiedergegebene Anzeige. Mit der Bewegung der Fingerspitze werden nämlich die graphischen Objekte 20 in Richtung des Pfeils B im Wesentlichen stufenlos verschoben. Entsprechend wird die Markierung 28 auf der Leiste 24 in entgegen gesetzter Richtung stufenlos verschoben, so dass die Markierung 28 dem Betrachter immer darstellt, welche Teilmengen bzw. welcher Ausschnitt der Leiste 21 mit den graphischen Objekten 20 momentan angezeigt wird.

Statt den Finger im Bereich der Leiste 21 in Richtung des Pfeils B zu bewegen, könnte der Nutzer auch die Anzeigefläche 2 im Bereich der Markierung 28 berühren und die Fingerspitze entsprechend in die andere Richtung bewegen, um die angezeigte Teilmenge mit den graphischen Objekten 20 auf der Leiste 21 zu verändern und gleichzeitig die Markierung 28 auf der Leiste 24 im Wesentlichen stufenlos zu verschieben.

Nach Abschluss des Bedienvorgangs wird - im Gegensatz zu einer herkömmlichen Bildlaufleiste - die Markierung 28 jedoch automatisch in Abhängigkeit von der Position der Markierung 28 relativ zu den Segmenten 25 bis 27 der Leiste 24 auf eines der Segmente 25, 26 oder 27 bewegt. Die Markierung 28 wird insbesondere auf das Segment 25, 26 oder 27 bewegt, mit welchem die größte Überdeckung beim Abschluss des Bedienvorgangs vorlag. Entsprechend verschiebt sich die Teilmenge mit den graphischen Objekten 20 derart, dass die erste Teilmenge angezeigt wird, wenn sich die Markierung 28 auf dem Segment 25 befindet, die zweite Teilmenge angezeigt wird, wenn sich die Markierung 28 auf dem Segment 26 befindet, und die dritte Teilmenge angezeigt wird, wenn sich die Markierung 28 auf dem Segment 27 befindet. Wenn der Bedienvorgang abgeschlossen wird, springt dabei nicht etwa die Markierung 28 auf das entsprechende Segment 25, 26 oder 27. Vielmehr wird eine Animation, insbesondere eine gedämpfte Bewegung, der Markierung 28 zu der Position ausgeführt. Gleichermaßen werden die Positionen der graphischen Objekte 20 bewegt, bis die entsprechende Teilmenge angezeigt wird.

Bei dem erfindungsgemäßen Verfahren sind die anzeigbaren Teilmengen somit im Voraus festgelegt. Sie sind durch den Bedienvorgang vom Nutzer nicht frei wählbar. Im vorliegenden Fall lassen sich beispielsweise nicht die graphischen Objekte 20 für die Radiosender Nr. 3 bis 8 gleichzeitig darstellen, nachdem der Bedienvorgang abgeschlossen wurde.

Anstatt einer Wischgeste kann der Nutzer auch ein bestimmtes Segment 25, 26 oder 27 der Leiste 24 antippen, um die Teilmenge zu verändern. Die Segmente 25 bis 27 sowie die Markierung 28 sind somit als so genannte Schaltflächen ausgebildet, welche vom Nutzer mittels der Eingabeeinrichtung betätigt werden können.

Die Ausdehnung der Markierung 28, d. h. im vorliegenden Fall insbesondere die Länge der Markierung 28, relativ zu der Ausdehnung bzw. Länge der Segmente 25, 26 und 27, stellt für den Betrachter intuitiv erkennbar die Anzahl der graphischen Objekte 20 der momentan angezeigten Teilmenge relativ zu der Gesamtzahl der graphischen Objekte der Menge dar. Um die Markierung 28 von den Segmenten 25 bis 27 unterscheiden zu können, kann die Markierung 28 beispielsweise in einer anderen Farbe, anderen Transparenz oder mit einer anderen Flächenfüllung dargestellt werden.

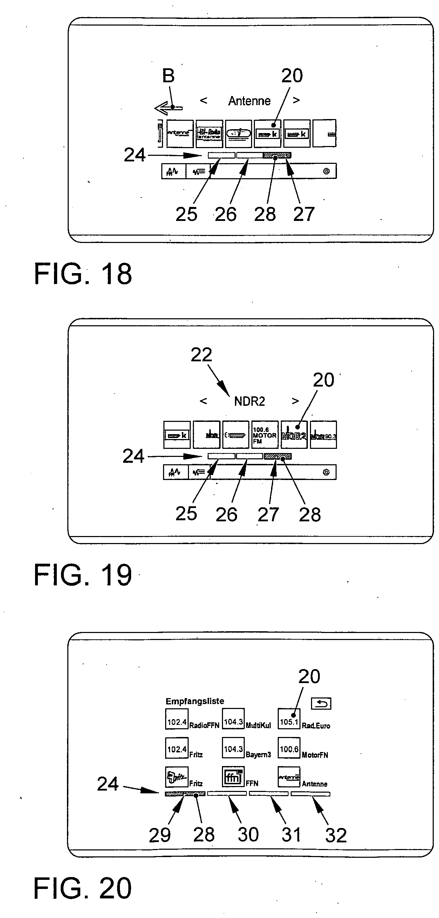

In den Fig. 20 bis 24 ist ein weiteres Beispiel des dritten Aspekt des erfindungsgemäßen Verfahrens gezeigt:

Bei diesem Beispiel werden die graphischen Objekte 20 nicht auf einer linearen, eindimensionalen Leiste 21 angezeigt, sondern, wie in Fig. 20 gezeigt, in einem zweidimensionalen Raster. In diesem Fall umfasst die Gesamtmenge der graphischen Objekte 20 für die Radiosender insgesamt siebenundzwanzig graphische Objekte 20. Diese siebenundzwanzig graphischen Objekte 20 werden in vier Teilmengen mit jeweils neun graphischen Objekten 20 unterteilt. Entsprechend umfasst die Leiste 24 vier Segmente 29 bis 32. Auf der Leiste 24 wird wie vorstehend erläutert die Markierung 28 angezeigt. Wie in den Fig. 20 bis 24 gezeigt, kann der Nutzer mittels der Eingabeeinrichtung die angezeigte Teilmenge von den ersten neun graphischen Objekten 20 für die Radiosendern zu den dritten neun graphischen Objekten 20 für die Radiosender verschieben, indem er beispielsweise die Markierung 28 auf der Leiste 24 verschiebt. Wie vorstehend erläutert ist das Verschieben der Markierung 28 im Wesentlichen stufenlos möglich. Nach Abschluss des Bedienvorgangs wird die Markierung 28 und entsprechend die angezeigten graphischen Objekte 20 in einer Animation so bewegt, dass eine im Voraus festgelegte Teilmenge mit neun graphischen Objekten 20 angezeigt wird.

Es wird darauf hingewiesen, dass nicht nur bei dem ersten Aspekt des erfindungsgemäßen Verfahrens, sondern auch bei dem zweiten und/oder dritten Aspekt des erfindungsgemäßen Verfahrens, die Geschwindigkeit des Fahrzeugs, welche der Steuervorrichtung 3 von der Messvorrichtung 7 übertragen wird, Einfluss auf die Geschwindigkeit der Animationen der graphischen Objekte haben kann. Insbesondere ist es möglich, dass bei höheren Fahrzeuggeschwindigkeiten Animationen schneller ablaufen als bei niedrigen Fahrzeuggeschwindigkeiten. Bei höheren Fahrzeuggeschwindigkeiten betrachtet insbesondere der Fahrer nämlich die Anzeigefläche 2 nur für einen kürzeren Zeitraum ununterbrochen, als bei langsameren Fahrzeuggeschwindigkeiten. Durch diese Anpassung an die Fahrzeuggeschwindigkeit kann somit erreicht werden, dass der Fahrer unabhängig von der Fahrzeuggeschwindigkeit dieselbe Bewegungsstrecke bei der Animation wahrnimmt. Dies erleichtert es dem Fahrer sich bei der Veränderung des Anzeigeinhalts zu orientieren und den veränderten Informationsinhalt schnell und intuitiv zu erfassen. Die Parameter der Animationen für die Darstellung der Informationen können somit ein Merkmal des erfindungsgemäßen Verfahrens und der erfindungsgemäßen Vorrichtung darstellen, welches optional verwirklicht werden kann. Bei der Bestimmung dieser Parameter wird insbesondere berücksichtigt, wie ein Fahrer eines Fahrzeugs Informationen während der Fahrt besonders effektiv erfassen kann.

### Bezugszeichenliste

- 1: Anzeigeeinrichtung
- 2: Anzeigefläche
- 3: Steuervorrichtung
- 4: Systemuhr
- 5: Speicher
- 6: Datenbus
- 7: Messvorrichtung für die Fahrzeuggeschwindigkeit
- 10: graphische Objekte
- 11: alphanumerische Beschriftung
- 20: graphische Objekte
- 21: Leiste
- 22: Anzeigeelement
- 23: Anzeigeelement
- 24: Leiste
- 25: Segment der Leiste 24
- 26: Segment der Leiste 24
- 27: Segment der Leiste 24
- 28: Markierung
- 29: Segment der Leiste 24
- 30: Segment der Leiste 24
- 31: Segment der Leiste 24
- 32: Segment der Leiste 24

## Patentansprüche

1. Verfahren zum Anzeigen von Informationen in einem Fahrzeug, bei dem
- mehrere graphische Objekte (10) mittels einer Steuervorrichtung (3) von einer Anzeigeeinrichtung (1) in einem ersten oder einem zweiten Anzeigemodus anzeigbar sind, und
- die Geschwindigkeit des Fahrzeugs gemessen wird,
**dadurch gekennzeichnet, dass**
- in einem ersten Geschwindigkeitsbereich die graphischen Objekte (10) in dem ersten Anzeigemodus angezeigt werden und in einem zweiten Geschwindigkeitsbereich dieselben graphischen Objekte (10) in dem zweiten Anzeigemodus angezeigt werden, wobei sich die beiden Anzeigemodi hinsichtlich des Layouts der Darstellung der graphischen Objekte (10), nicht jedoch hinsichtlich des Inhalts bezüglich der graphischen Objekte (10) unterscheiden und die gleiche Anzahl der graphischen Objekte (10) in jeweils verschiedener Anordnung dargestellt wird.

2. Verfahren nach Anspruch 1,
**dadurch gekennzeichnet,**
**dass** die Geschwindigkeitsbereiche disjunkt sind, so dass beim Über- oder Unterschreiten zumindest eines Grenzwerts der Geschwindigkeit von dem einen Geschwindigkeitsbereich in den anderen Geschwindigkeitsbereich gewechselt wird.

3. Verfahren nach Anspruch 1 oder 2,
**dadurch gekennzeichnet,**
**dass** beim Übergang von dem einen Anzeigemodus in den anderen Anzeigemodus eine Hysterese durchlaufen wird.

4. Verfahren nach Anspruch 2 oder 3,
**dadurch gekennzeichnet,**
**dass** zumindest ein Grenzwert der Geschwindigkeit in einem Bereich von 4 km/h bis 20 km/h liegt.

5. Verfahren nach einem der vorhergehenden Ansprüche,
**dadurch gekennzeichnet,**
**dass** die Anzahl der in den Anzeigemodi angezeigten graphischen Objekte größer als acht ist.

6. Verfahren nach einem der vorhergehenden Ansprüche,
**dadurch gekennzeichnet,**
**dass** beim Übergang von dem einen in den anderen Anzeigemodus die Steuervorrichtung (3) die Anzeigeeinrichtung (1) so ansteuert, dass sich die in den einen Anzeigemodus dargestellten Objekte (10) aufeinander zu bewegen, bis sie sich in einem zentralen Bereich vereinen, und daraufhin voneinander weg in Richtung der Positionen der Darstellung in dem anderen Anzeigemodus bewegen.

7. Verfahren nach Anspruch 6,
**dadurch gekennzeichnet,**
**dass** die Bewegung der graphischen Objekte von den Positionen bei der Darstellung in dem einen Anzeigemodus aufeinander zu in Richtung des zentralen Bereichs beschleunigt ist und die Bewegung der graphischen Objekte danach voneinander weg in Richtung der Positionen bei der Darstellung in dem anderen Anzeigemodus abgebremst ist.

8. Verfahren nach einem der vorhergehenden Ansprüche,
**dadurch gekennzeichnet,**
**dass** bei dem ersten Anzeigemodus die graphischen Objekte (10) auf einem virtuellen, perspektivisch dargestellten Ring angeordnet dargestellt werden.

9. Verfahren nach einem der vorhergehenden Ansprüche,
**dadurch gekennzeichnet,**
**dass** bei dem zweiten Anzeigemodus die graphischen Objekte (10) nebeneinander, überlappungsfrei in einem Raster dargestellt werden, wobei jedes graphische Objekt (10) unabhängig von einer Auswahl eines graphischen Objekts (10) eine feste Position in dem Raster hat.

10. Vorrichtung zum Anzeigen von Informationen in einem Fahrzeug mit
- einer Anzeigeeinrichtung (1),
- einer Steuervorrichtung (3) zum Steuern der Anzeige der Anzeigeeinrichtung (1), wobei mittels der Steuervorrichtung (3) mehrere graphische Objekte (10) von der Anzeigeeinrichtung (1) in einem ersten oder einem zweiten Anzeigemodus anzeigbar sind, und
- einer mit der Steuervorrichtung (3) gekoppelten Messvorrichtung (7) zum Messen der Geschwindigkeit des Fahrzeugs,
**dadurch gekennzeichnet, dass**
- mittels der Steuervorrichtung (3) die Anzeigeeinrichtung (1) so ansteuerbar ist, dass in einem ersten Geschwindigkeitsbereich die graphischen Objekte (10) in dem ersten Anzeigemodus angezeigt werden und in einem zweiten Geschwindigkeitsbereich dieselben graphischen Objekte (10) in dem zweiten Anzeigemodus angezeigt werden, wobei sich die beiden Anzeigemodi hinsichtlich des Layouts der Darstellung der graphischen Objekte (10), nicht jedoch hinsichtlich des Inhalts bezüglich der graphischen Objekte (10) unterscheiden und die gleiche Anzahl der graphischen Objekte (10) in jeweils verschiedener Anordnung dargestellt wird.

## Claims

1. Method for displaying information in a vehicle, in which
- a plurality of graphical objects (10) can be displayed by means of a control apparatus (3) by a display device (1) in a first or a second display mode, and
- the speed of the vehicle is measured,
**characterized in that**
- in a first speed range the graphical objects (10) are displayed in the first display mode and in a second speed range the same graphical objects (10) are displayed in the second display mode, the two display modes differing in terms of the layout of the depiction of the graphical objects (10), but not in terms of the content for the graphical objects (10), and the same number of graphical objects (10) being depicted in a respective different arrangement.

2. Method according to Claim 1,
**characterized**
**in that** the speed ranges are disjunct, with the result that exceeding or dropping below at least one limit value for the speed prompts a change from one speed range to the other speed range.

3. Method according to Claim 1 or 2,
**characterized**
**in that** the transition from one display mode to the other display mode involves a hysteresis.

4. Method according to Claim 2 or 3,
**characterized**
**in that** at least one limit value for the speed is in the range from 4 km/h to 20 km/h.

5. Method according to one of the preceding claims,
**characterized**
**in that** the number of graphical objects displayed in the display modes is greater than eight.

6. Method according to one of the preceding claims,
**characterized**
**in that** the transition from one to the other display mode prompts the control apparatus (3) to actuate the display device (1) such that the objects (10) presented in one display mode move toward one another until they combine in a central area, and subsequently move away from one another in the direction of the positions of the presentation in the other display mode.

7. Method according to Claim 6,
**characterized**
**in that** the movement of the graphical objects from the positions for presentation in one display mode toward one another in the direction of the central area is speeded up and the movement of the graphical objects subsequently away from one another in the direction of the positions for presentation in the other display mode is slowed down.

8. Method according to one of the preceding claims,
**characterized**
**in that** the first display mode involves the graphical objects (10) being presented in an arrangement on a virtual ring presented in perspective.

9. Method according to one of the preceding claims,
**characterized**
**in that** the second display mode involves the graphical objects (10) being presented beside one another, without overlap in a grid, wherein each graphical object (10) has a fixed position in the grid irrespective of a selection of a graphical object (10).

10. Apparatus for displaying information in a vehicle having
- a display device (1),
- a control apparatus (3) for controlling the display on the display device (1), wherein the control apparatus (3) allows a plurality of graphical objects (10) to be displayed by the display device (1) in a first or a second display mode, and
- a measuring apparatus (7), coupled to the control apparatus (3), for measuring the speed of the vehicle,
**characterized in that**
- the control apparatus (3) can be used to actuate the display device (1) such that in a first speed range the graphical objects (10) are displayed in the first display mode and in a second speed range the same graphical objects (10) are displayed in the second speed mode, the two display modes differing in terms of the layout of the depiction of the graphical objects (10), but not in terms of the content for the graphical objects (10), and the same number of graphical objects (10) being depicted in a respective different arrangement.

## Revendications

1. Procédé destiné à afficher des informations dans un véhicule, dans lequel
- une pluralité d'objets graphiques (10) peut être affichée dans un premier ou un second mode d'affichage au moyen d'un dispositif de commande (3) d'un dispositif d'affichage (1), et
- la vitesse du véhicule est mesurée,
**caractérisé en ce que**
- dans une première plage de vitesses, les objets graphiques (10) sont affichés dans le premier mode d'affichage et dans une seconde plage de vitesses, les mêmes objets graphiques (10) sont affichés dans le second mode d'affichage, dans lequel les deux modes d'affichage diffèrent en ce qui concerne la disposition des objets graphiques (10), mais pas en ce qui concerne le contenu des objets graphiques (10), et le même nombre d'objets graphiques (10) est affiché dans un agencement respectif différent.

2. Procédé selon la revendication 1,
**caractérisé en ce que** les plages de vitesses sont disjointes, de sorte que si au moins une valeur limite de la vitesse est dépassée ou n'est pas atteinte, un passage de la plage de vitesse à l'autre plage de vitesse est effectué.

3. Procédé selon la revendication 1 ou 2,
**caractérisé en ce qu'**une hystérésis est parcourue pendant le passage d'un mode d'affichage à l'autre mode d'affichage.

4. Procédé selon la revendication 2 ou 3,
**caractérisé en ce qu'**au moins une valeur limite de la vitesse se situe dans une plage de 4 km/h à 20 km/h.

5. Procédé selon l'une des revendications précédentes,
**caractérisé en ce que** le nombre d'objets graphiques affichés dans lesdits modes d'affichage est supérieur à huit.

6. Procédé selon l'une des revendications précédentes,
**caractérisé en ce que**, lors du passage d'un mode d'affichage à l'autre, le dispositif de commande (3) commande le dispositif d'affichage (1) de manière à ce que les objets (10) affichés dans ledit mode d'affichage se déplacent les uns vers les autres jusqu'à ce qu'ils s'unissent dans une zone centrale, puis s'éloignent les uns des autres dans la direction des positions de la représentation dans l'autre mode d'affichage.

7. Procédé selon la revendication 6,
**caractérisé en ce que** le mouvement des objets graphiques à partir desdites positions lors de la représentation dans ledit mode d'affichage est accéléré dans la direction de la zone centrale et **en ce que** le mouvement des objets graphiques est ensuite ralenti dans la direction desdites positions lors de la représentation dans l'autre mode d'affichage.

8. Procédé selon l'une des revendications précédentes,
**caractérisé en ce que**, dans le premier mode d'affichage, les objets graphiques (10) sont représentés disposés sur un anneau virtuel représenté en perspective.

9. Procédé selon l'une des revendications précédentes,
**caractérisé en ce que**, dans le second mode d'affichage, les objets graphiques (10) sont représentés côte à côte dans une grille sans chevauchement, dans lequel chaque objet graphique (10) a une position fixe dans la grille indépendamment d'une sélection d'un objet graphique (10).

10. Dispositif destiné à afficher des informations dans un véhicule comprenant
- un dispositif d'affichage (1),
- un dispositif de commande (3) destiné à commander l'affichage du dispositif d'affichage (1), dans lequel plusieurs objets graphiques (10) du dispositif d'affichage (1) peuvent être affichés au moyen du dispositif de commande (3) dans un premier ou un second mode d'affichage, et
- un dispositif de mesure (7) couplé au dispositif de commande (3) pour mesurer la vitesse du véhicule,
**caractérisé en ce que**
- le dispositif d'affichage (1) peut être commandé au moyen du dispositif de commande (3) de manière à ce que, dans une première plage de vitesses, les objets graphiques (10) soient affichés dans le premier mode d'affichage et que, dans une seconde plage de vitesses, les mêmes objets graphiques (10) soient affichés dans le second mode de vitesse, dans lequel les deux modes d'affichage sont différents en ce qui concerne la disposition de la représentation des objets graphiques (10), mais pas en ce qui concerne le contenu par rapport aux objets graphiques (10), et **en ce que** le même nombre d'objets graphiques (10) est représenté dans un agencement respectif différent.
